# FASCICULE DE BREVET EUROPEEN

(11) **EP 3 972 820 B1**
(45) Date de publication et mention de la délivrance du brevet: **12.07.2023**
(21) Numéro de dépôt: 20735231.1
(22) Date de dépôt: 19.05.2020
(51) Int. Cl.: B29C 64/386, B33Y 50/00, B29C 71/00, B41J 3/407, B41J 11/00, B05D 3/06, B41M 5/00, B05D 3/00, B29C 71/04, B41M 5/24, B41M 5/26

(54) **SYSTÈME ET PROCÉDÉ POUR LE TRAITEMENT DE SURFACE SÉLECTIF ET LOCALISÉ DE PIÈCES, NOTAMMENT PAR DÉPÔT DE MATIÈRE**
SYSTEM UND VERFAHREN ZUR SELEKTIVEN UND LOKALEN BEHANDLUNG DER OBERFLÄCHE VON TEILEN, INSBESONDERE DURCH MATERIALABSCHEIDUNG
SYSTEM AND PROCESS FOR SELECTIVELY AND LOCALLY TREATING THE SURFACE OF PARTS, ESPECIALLY VIA DEPOSITION OF MATERIAL

(30) Priorité: 20.05.2019 FR 1905232
(43) Date de publication de la demande: 30.03.2022
(73) Titulaire: Westlake Compounds Holding, 51100 Reims (FR)
(72) Inventeur: AMOUROUX, Nicolas, 51100 REIMS (FR); EL FOUZARI, Mustapha, 51100 REIMS (FR); ELAARAG, Hossam, 51100 REIMS (FR)
(74) Mandataire: Schmidt, Martin Peter
(86) Numéro de dépôt international: PCT/FR2020/000175
(87) Numéro de publication internationale: WO 2020/234517

(56) Documents cités:
- DE-A1-102012 212 469
- FR-A1- 3 023 943
- US-A1- 2018 322 621

## Description

### Domaine technique de l'invention

L'invention concerne les méthodes de traitement de surface sélectif et localisé de pièces par dépôt de matière, et plus particulièrement par impression par jet d'encre. Plus particulièrement, l'invention concerne un procédé de traitement de surface qui comprend une étape de décoration sélective et localisée par dépôt d'encre sur des zones qui seront déterminées lors de l'exécution du procédé même, en fonction de leur relief. Ce procédé peut être utilisé pour la décoration de pièces de forme présentant un relief de surface régulier ou irrégulier, tel qu'un grainage, une couture, un joint, un logo, un motif ou un rebord.

### Etat de la technique

On connaît des techniques de traitement de surface de pièces par dépôt de matière, par exemple l'impression par jet d'encre. Ces techniques peuvent être utilisées pour imprimer des images sur des surfaces de grande dimension, ces surfaces présentant par exemple une dimension de l'ordre de quelques décimètres à un ou deux mètres. L'impression peut être effectuée par une tête d'impression à jet d'encre qui se déplace au bout d'un bras d'un robot multi-axes.

Un tel système est décrit dans la demande de brevet US 2015 / 0042 716 (Heidelberger Druckmaschinen AG). Il est capable d'imprimer par jet d'encre des images sur des surfaces galbées comme des carrosseries d'automobiles. Des systèmes similaires sont décrits dans les documents US 2014/0063096 (Heidelberger Druckmaschinen AG), pour l'impression sur des carrosseries d'automobiles, et US 2013/0314460 (Exatex), pour l'impression sur des fenêtres d'automobiles. EP 2 873 496 A1 (ABB Technology AG) propose un système similaire dans lequel la tête d'impression par jet d'encre est reliée au bras d'un robot à six axes par un actuateur piézo-électrique capable d'effectuer un mouvement contrôlé.

Les documents DE102012212469 A1 et US2018/322621 A1 décrivent également des procédés de traitement de données, appliqués à la décoration ou impression d'images sur des surfaces nonplanes.

Ces systèmes comprennent en règle générale un système d'acquisition de la forme globale (plane ou galbée) de la pièce sur le trajet qui sera le trajet de la tête d'impression par jet d'encre. Ils sont capables d'imprimer l'image sur cette surface plane ou galbée. Ces système ne conviennent en revanche pas pour un autre usage, pour lequel ils n'ont d'ailleurs pas être conçus, à savoir le traitement de surface sélectif de zones issues d'aspects de relief local, par exemple de bosses, plis, rainures ou autres aspects. On trouve de tels aspects de surface par exemple sur des surfaces de cuir, naturel ou artificiel, où ils peuvent être provoqués par le grainage du cuir ou par des coutures. Même dans le cas de pièces obtenues par moulage dans un même moule, la position et la forme de ces aspects de relief local n'est pas strictement reproductible d'une pièce à l'autre. Lors de la décoration d'une telle surface par impression, le positionnement de l'image peut devenir imprécis par ce manque de reproductibilité du relief de surface.

Les systèmes selon l'état de la technique sont capables d'imprimer une image sur de telles surfaces présentant des aspects locaux, en se basant sur la forme globale de la pièce précédemment acquise, et en négligeant les aspects locaux de la surface ; cette impression peut être d'une précision suffisante si l'image imprimée ne doit pas être superposée à un relief local. En revanche, les systèmes selon l'état de la technique ne sont pas capables de traiter de manière sélective ces aspects de surface locaux. A titre d'exemple, ils ne sont pas capables de déposer de manière sélective de l'encre sur des traits de couture d'une surface de cuir, ou de colorer sélectivement la ligne de grainage (i.e. la dépression entre deux grains) d'une surface de cuir. Le terme « surface de cuir » se réfère ici à l'aspect de surface et non pas au matériau dont la nature chimique n'a pas d'importance pour le problème posé ; cette surface de cuir pouvant être une surface de cuir artificiel, tel qu'une matière plastique, comme cela est courant par exemple dans les domaine des tableaux de bord d'automobiles.

Le problème que la présente invention cherche à résoudre est de proposer un système de traitement de surfaces planes ou galbées, qui permet le traitement de surface sélectif, par exemple la décoration sélective, de zones de ladite surface qui s'inscrivent en relief (soit en dépression, soit en protubérance) sur ladite surface. Ce système doit présenter un décalage aussi faible que possible dans une direction prise parallèle au plan du substrat, et un décalage aussi faible que possible dans la direction perpendiculaire au plan du substrat.

### Objets de l'invention

Un premier objet de l'invention est un procédé de traitement sélectif et localisé de la surface d'une pièce, dans lequel
( a) On approvisionne une pièce présentant une surface à traiter, ladite surface étant définie par une direction P et une direction Q, lesdites directions P et Q pouvant présenter une courbure ;
( b) On acquiert des données profilométriques tridimensionnelles de la surface à traiter, pour obtenir un ensemble F1 de données tridimensionnelles de la surface à traiter, ledit ensemble F1 associant à chaque point dans le plan PQ une hauteur ;
( c) On procède à un traitement numérique de ce cet ensemble F1 de données visant à soustraire lesdites courbures, pour obtenir un ensemble F2 de données tridimensionnelles retraitées de la surface à traiter ;
( d) On procède à un traitement numérique de cet ensemble F2 de données, pour obtenir un ensemble F3 de données binaires de la surface à traiter, ledit traitement numérique attribuant à chaque point de la surface une première valeur binaire ou une deuxième valeur binaire, selon au moins un critère lié à la hauteur du point de la surface ;
( e) On procède à un traitement sélectif et localisé de la surface en utilisant ledit ensemble F3 de données binaires, ledit traitement de surface étant effectué uniquement pour les points de la surface dont la donnée binaire prend ladite première ou ladite deuxième valeur binaire.

Typiquement, ladite surface à traiter présente des éléments de surface en relief.

Dans une mode de réalisation, lesdites données profilométriques tridimensionnelles sont obtenues à partir d'une succession de balayages linéaires selon des lignes de balayages parallèles à ladite direction P, avec un espacement constant entre deux lignes de balayages voisines, ledit espacement constant étant de préférence inférieur à 100 µm, et encore plus préférentiellement inférieur à 90 µm.

A l'étape (c) on peut effectuer au moins une opération de filtrage numérique des données, par exemple pour éliminer des points aberrants.

Dans un mode de réalisation particulier, ledit critère lié à la hauteur du point de la surface à l'étape (d) attribue une même valeur binaire à tous les points situés entre une hauteur minimale et une hauteur maximale.

Dans un autre mode de réalisation particulier on répète l'étape (d) pour obtenir un ensemble de données F3' avec un critère lié à la hauteur du point de la surface, ledit critère étant différent de celui ayant été utilisé pour générer ledit ensemble de données F3, et on effectue deux traitements selon l'étape (e), à savoir un pour chacun des ensembles de données F 3 et F3', lesdits traitements pouvant être de natures identiques ou différentes.

Dans un autre mode de réalisation, qui peut être combiné avec tous les autres, on retraite l'ensemble de données F3 pour éliminer des points isolés de traitement de surface, ou encore pour éliminer des zones contiguës de traitement de surface n'atteignant pas une certaine superficie, ou encore pour élargir des zones contiguës de traitement de surface, ou encore pour arrondir les angles de zone de traitement de surface, ou encore pour supprimer des trous d'une taille inférieure à un certain nombre de points à l'intérieur d'une zone de traitement de surface.

Typiquement ledit traitement de surface est identique pour tous les points dont la valeur binaire prend ladite première ou deuxième valeur.

Ledit traitement de la surface peut comprendre une étape de dépôt de matière, tel que le dépôt d'encre, ou une étape d'enlèvement de matière, tel que le perçage d'un trou, ou une étape de modification chimique de la surface, tel qu'un apport d'énergie apte à réticuler la surface.

Dans une variante du procédé on effectue un premier traitement de surface pour les points dont la donnée binaire prend ladite première valeur binaire, puis un deuxième traitement de surface pour les points dont la valeur binaire prend ladite deuxième valeur binaire.

Ladite pièce est typiquement sélectionné dans le groupe formé par :
- les pièces d'habillage d'un habitacle de véhicule, et notamment d'une automobile, tels que les pièces d'habillage de tableaux de bord ou de portes,
- les pièces en cuir naturel ou artificiel, notamment les pièces de maroquinerie et d'ameublement ou des pièces entrant dans la fabrication des parties visibles de pièces de maroquinerie ou d'ameublement,
- les pièces présentant une surface en tissu,
- les pièces métalliques ou plastiques fabriquées en contact avec la surface d'un moule.

Un autre objet de l'invention est l'utilisation du procédé selon l'invention pour la décoration de pièces présentant un relief de surface régulier ou irrégulier, ledit relief de surface pouvant représenter notamment un grainage, une couture, un joint, un rebord, un estampage.

Encore un autre objet de l'invention est un dispositif comprenant :
- un robot comprenant au moins un bras de préhension capable de porter un profilomètre laser, apte à acquérir les données profilométriques tridimensionnelles, et au moins un outil de traitement de surface ;
- une machine informatique communiquant avec ledit robot, ledit profilomètre laser et ledit au moins un outil de traitement de surface, et configurée pour contrôler l'activité dudit robot, dudit profilomètre laser et dudit au moins une outil de traitement de surface ;
ledit dispositif étant configuré pour et apte à la mise en oeuvre du procédé de traitement sélectif et localisée de la surface d'une pièce selon l'invention. Avantageusement, ladite machine informatique est configurée pour effectuer lesdits traitements numériques de données aux étapes (c) et (d). Si ledit traitement de surface est un traitement par dépôt de matière, ledit outil de traitement de surface est avantageusement une tête à impression par jet d'encre.

Un dernier objet de l'invention est un programme d'ordinateur comprenant des instructions de code de programme pour l'exécution des étapes d'un procédé selon l'invention, lorsque ledit programme fonctionne sur une machine informatique destinée et apte à contrôler l'activité d'un dispositif selon l'invention.

### Figures

Fig. 1 montre de manière schématique la tête de mesure du dispositif de traitement de surface selon l'invention. Ce composant fait partie de l'état de la technique.
Les figures 2 à 7 illustrent différents aspects de l'invention ; elles ne limitent pas la portée de l'invention.

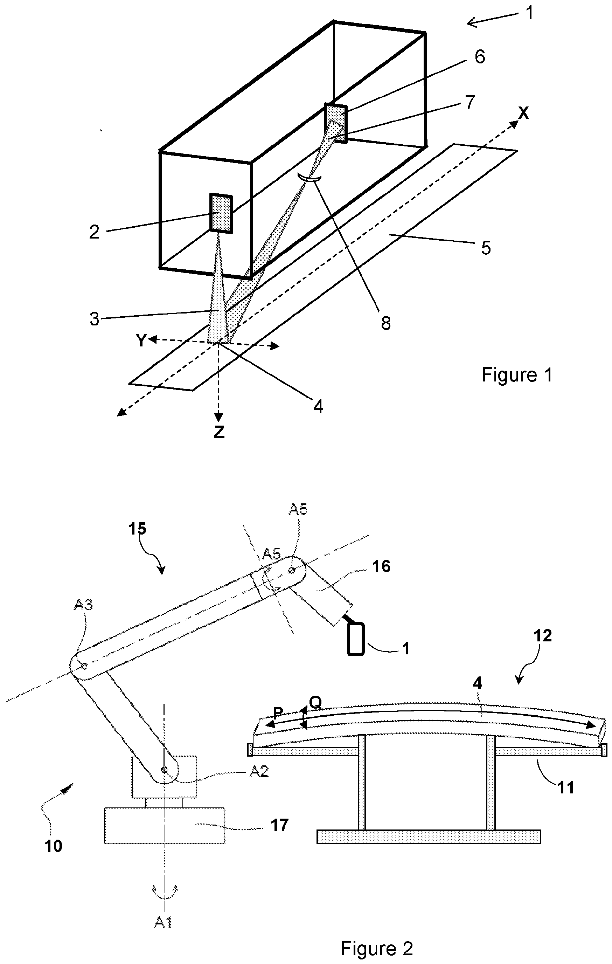

Fig. 2 montre de manière schématique le dispositif de traitement de surface selon l'invention, qui permet de mettre en oeuvre le procédé de traitement de surface sélectif et localisé selon l'invention.

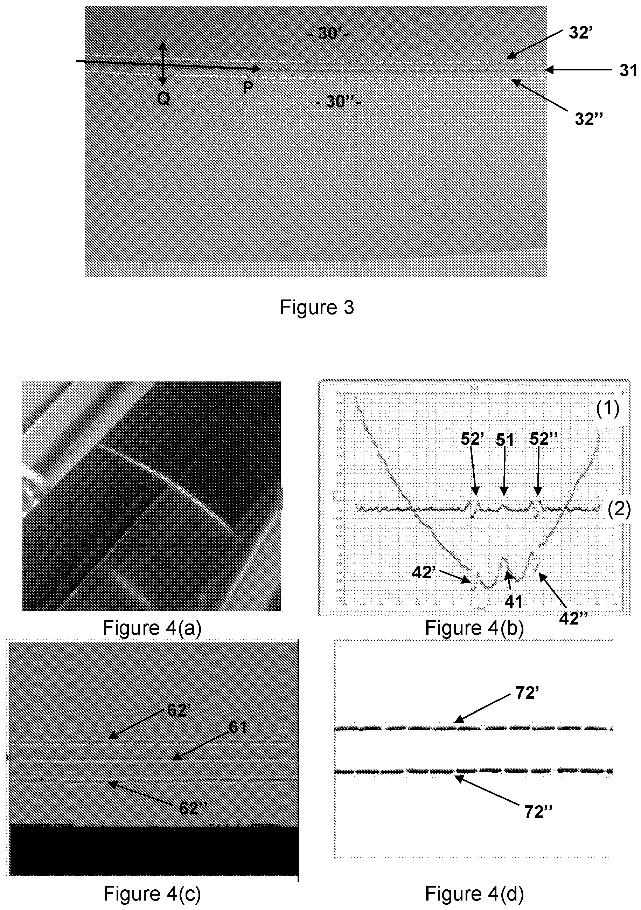

Fig. 3 est la photographie d'une pièce d'habillage de tableau de bord de véhicule automobile présentant trois lignes parallèles de fausses coutures, dont les deux lignes périphériques ont été traitées par impression avec le procédé selon l'invention. La longueur de chaque trait de fausse couture est ici de l'ordre de 4 à 6 mm, et sa largeur est d'environ 1 mm.
Fig. 4 illustre quatre étapes du procédé selon l'invention (appliqué à une pièce d'habillage de tableau de bord similaire à celle montrée sur la figure 3), à savoir l'acquisition du relief de surface par un faisceau laser balayant au sens orthogonal (direction Q) à la ligne de fausses coutures et se déplaçant au sens parallèle (direction P) à ladite ligne (Fig. 4(a)) ;
un relief de surface dans le sens orthogonal (direction Q) à la ligne de couture, brut (courbe (1)) et retraité par soustraction de la courbure (Fig. 4(b)) ; la reconstruction d'une image tridimensionnelle de la surface analysée (Fig. 4(c)) par une succession d'acquisitions (la hauteur dans le sens orthogonal au plan Q-P étant exprimée par des niveaux de gris) ; une image binaire (noir et blanc) des aspects de surface critiques, identifiés à l'encre noire en vue de leur décoration sélective (Fig. 4(d)).

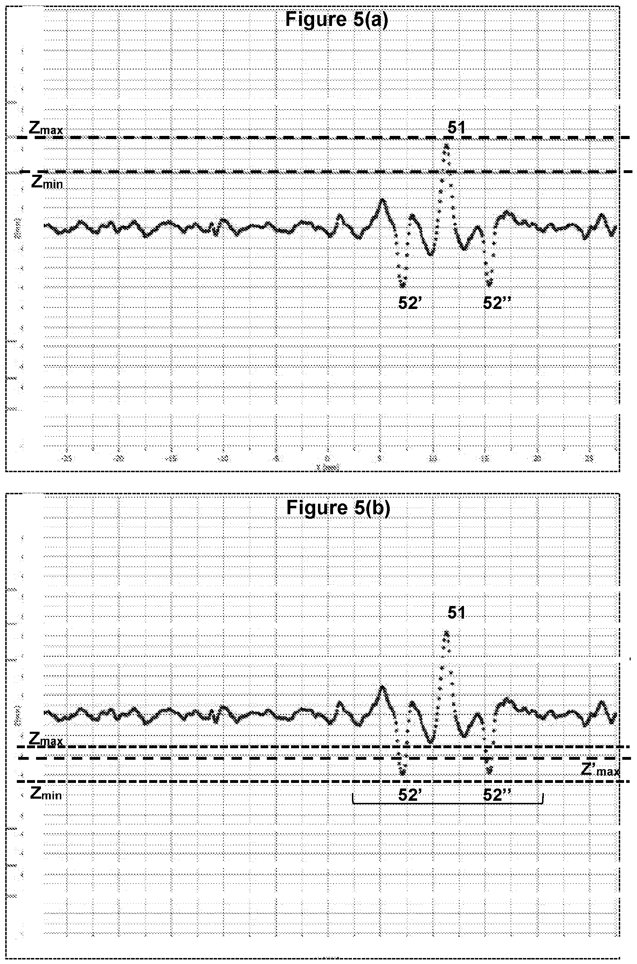

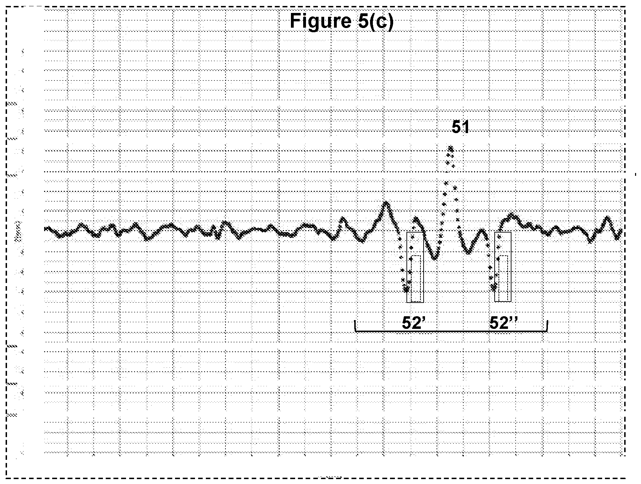

Fig. 5 montre une courbe similaire à la courbe (2) de la figure 4(b), qui représente également trois lignes de fausses coutures d'un tableau de bord. Fig. 5(a), Fig. 5(b) et Fig. 5(c) représentent alors trois traitements différents des données tridimensionnelles en vue d'obtenir une image binaire de la surface, qui définit la zone sur laquelle sera appliqué le traitement de surface.

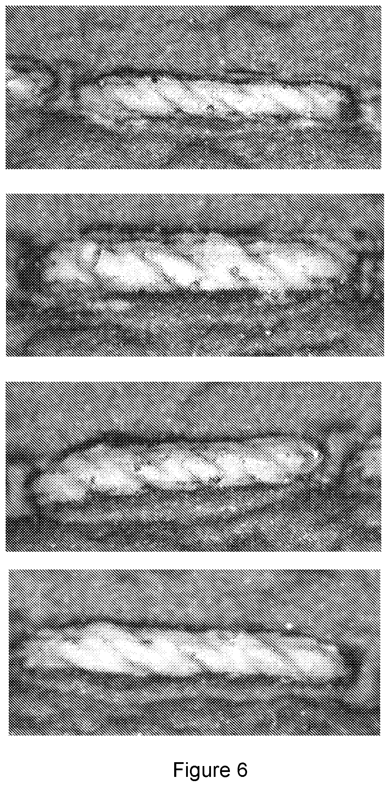

Fig. 6 montre la micrographie optique des quatre traits de fausse couture (ces traits étant similaires à ceux qui forment les deux lignes périphériques de traits sur les figures 3 et 4(c)) après décoration à l'encre grise à l'aide du procédé selon l'invention. La longueur de chaque trait de fausse couture est de l'ordre de 4mm. Dans cet exemple, l'encre est déposée sur des zones hautes du relief.

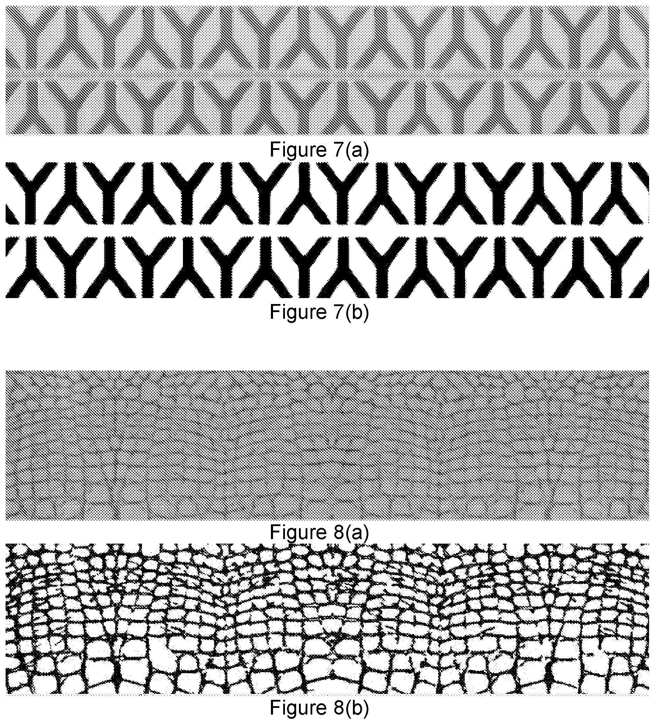

Fig. 7 et Fig.8 montrent deux autres exemples de pièces dont la surface peut être traitée de manière sélective et localisée par dépôt de matière par jet d'encre en utilisant le procédé et le dispositif selon l'invention. Fig. 7(a) et Fig. 8(a) montrent la reconstruction d'une image tridimensionnelle de la surface analysée par une succession d'acquisitions (la hauteur dans le sens orthogonal au plan Q-P étant exprimée par des niveaux de gris), Fig. 7(b) et Fig. 8(b) montrent une image binaire des aspects de surface critiques, identifiés en vue de leur décoration sélective. Dans les deux cas, l'encre est déposée sur des zones en dépression (creux du relief).

### Description détaillée

Les inventeurs se sont rendu compte que l'impression d'une image sur la surface présentant un relief avec des aspects de surface ne permet pas de résoudre le problème de manière satisfaisante. On entend ici par impression d'image un procédé dans lequel on imprime une image prédéterminée, possiblement redimensionné dans l'espace en fonction de la géométrie locale, sur une surface. Selon l'invention, le traitement de surface sélectif (dont l'impression représente un cas particulier), se fait uniquement sur des zones sélectionnées en fonction de la présence de certains aspects de surface, et en tenant compte de leur hauteur et/ou de leur profondeur et/ou de leur forme précise.

Dans une première étape du procédé selon l'invention on approvisionne une pièce présentant une surface à traiter. La surface à traiter de cette pièce peut être galbée, typiquement selon un axe long, et/ou selon un axe court qui peut être orthogonal ou non par rapport audit axe long. Lesdits axes long et court peuvent être rectilignes ou incurvés. La surface à traiter est typiquement une zone d'une surface galbée de la pièce, par exemple une zone longitudinale sensiblement parallèle au sens long de la pièce. Dans un autre mode de réalisation la surface à traiter n'est pas galbée mais sensiblement plane.

La surface à traiter de la pièce comprend typiquement des éléments en relief, qui peuvent s'étendre sur toute ou partie de la surface à traiter, et selon n'importe quelle disposition géométrique ou forme. Ces éléments en relief peuvent être des éléments décoratifs.

A titre d'exemple, les éléments en relief peuvent comprendre des protubérances ou des dépressions. Ils peuvent être disposés selon des lignes étroites et allongées, ou au contraire s'étendre sur une fraction importante de la surface à traiter. A titre d'exemple, les éléments en relief peuvent être représentés par des fausses coutures, et/ou par un grainage façon cuir, et/ou ou par une « peau de crocodile », ou encore par toutes sortes de piquages, reliefs obtenus par quel procédé que ce soit (tel que le marquage, qui peut être effectué à chaud ou à froid, et/ou l'embossage, qui peut être effectué à chaud ou à froid), ou relief naturels.

La pièce est avantageusement fixée dans l'espace dans une orientation déterminée. Avantageusement elle est placée sur un support. Si sa surface à traiter présente un axe long, la pièce est avantageusement orientée de manière à ce que cet axe long soit approximativement horizontal.

Dans une variante la pièce n'est pas fixe mais se déplace lors de l'exécution d'au moins une des étapes suivantes du procédé. Par exemple, elle peut être fixée sur un chariot mobile capable de se déplacer selon un trajet rectiligne ou non, et/ou qui peut être incliné dans une ou plusieurs directions, et/ou qui peut subir une rotation autour d'au moins un axe. La pièce peut subir une rotation autour de son axe long, si elle présente un tel axe long, et/ou elle peut subir une rotation autour de son axe court, si elle présente un tel axe court, et/ou elle peut subir tout autre type de rotation, d'inclinaison ou de déplacement dans l'espace.

Dans tous les cas, lorsque l'on souhaite traiter un grand nombre de pièces réputées identiques (issues par exemple d'une même série de production, par exemple issues du même moule de plasturgie), il est important que le support permette un positionnement reproductible de la pièce ; le cas échéant il faut fabriquer un support spécifique pour chaque type de pièce.

Dans une deuxième étape on acquiert des données de profilométrie de la surface à traiter. Ces données de profilométrie sont des donnés tridimensionnelles, reconstruites à partir d'une succession de balayages linéaires bidimensionnelles (appelées ici lignes profilométriques) avec un faisceau laser. Ces lignes de profilométrie sont parallèles les unes par rapport aux autres, et l'espacement entre deux lignes voisines est avantageusement constant.

Ces données de profilométrie doivent d'abord représenter la forme tridimensionnelle globale de la surface à traiter. Elles doivent également représenter ou permettre de déterminer, avec une résolution tridimensionnelle suffisante, les éléments décoratifs. Cette résolution minimale dépend de la forme de la surface à traiter, de la nature et forme des éléments de décor, de l'échelle de longueur et de profondeur des éléments de décor, et de l'exigence de précision du traitement de la surface à traiter.

Cette deuxième étape peut se faire par exemple à l'aide d'une tête de mesure d'un scanneur laser qui est fixée sur un bras de robot et qui effectue une ou plusieurs passes de balayage au-dessus de la surface à traiter. Ces passes se font avantageusement parallèlement au sens long de la pièce (direction désignée ici par la lettre P). En fonction de la dimension de la zone de la surface à traiter l'acquisition des données peut se faire en une ou on plusieurs passes. Plus particulièrement, chaque passe permet typiquement d'acquérir des donnés sur une zone présentant une certaine largeur Q dans une direction orthogonale à la ligne de balayage. En fonction de la largeur de la surface à traiter il peut donc être nécessaire de subdiviser la largeur de la zone à traiter en plusieurs sous-zones dont chacune fera l'objet d'au moins une passe de balayage ; ces sous-zones peuvent présenter un recouvrement partiel. Typiquement, l'acquisition des données est faite par une succession de d'acquisitions individuelles de profils linéaires dans le sens Q, deux acquisitions individuelles successives étant espacés d'une même distance dans le sens P. Ainsi on construit un profil tridimensionnel à partir d'une succession d'acquisitions bidimensionnelles (lignes profilométriques).

Une première passe dans le sens P peut permettre de déterminer la forme globale de la surface à traiter, et une deuxième passe peut ensuite permettre une acquisition de données avec une résolution plus fine de la surface à traiter. Au moins pendant cette deuxième passe la distance entre la tête de mesure et la surface reste avantageusement constante ou varie peu (avantageusement au plus de ± 5, de préférence au plus de ± 3 mm, et encore plus préférentiellement au plus de ± 2 mm), et l'orientation du faisceau laser par rapport à la surface reste également constante. Pour cette raison, pour des pièces galbées il est avantageux que la tête de mesure soit fixée sur le bras d'un robot à cinq ou six axes.

Lorsque la surface de la pièce à traiter présente un sens long, la passe de balayage est avantageusement parallèle à ce sens long. Avantageusement une seule passe de balayage est effectuée pour analyser une zone de largeur Q donnée. Dans un mode de réalisation avantageux, pour des pièces fortement galbées et/ou pour des lignes P et/ou Q qui ne sont pas des droites, il n'est pas avantageux de modifier lors du balayage dans le sens Q la hauteur z de la tête de mesure, et/ou de modifier lors du balayage dans le sens P la hauteur z de la tête de mesure et/ou de suivre la courbure de la ligne P et/ou Q ; dans ce cas il est souvent préférable de limiter la zone d'acquisition de données à une zone qui ne nécessite pas de tels ajustements, et de définir ensuite une autre zone d'acquisition de données voisine de la première. Autrement dit : il peut être préférable de restreindre le nombre de mouvements indépendants du bras du robot lors du balayage de la tête de mesure. La même remarque s'applique, lors de la cinquième étape, à l'outil de traitement de surface, qui est porté également par le bras du robot.

Cette deuxième étape implique la génération d'un premier fichier de données tridimensionnelles de la surface de la pièce ; ce fichier est appelé ici F1. Il est construit en utilisant les données correspondantes aux lignes profilométriques acquises dans les sens Q, prises dans leur succession sur la ligne P.

Dans une troisième étape on procède au traitement numérique et à l'analyse des données de profilométrie. Ce traitement peut comprendre plusieurs étapes individuelles. Il peut comprendre un filtrage numérique. Ce filtrage peut être effectué pour chaque ligne profilométrique qui a été acquise, et/ou pour le profil tridimensionnel qui a été reconstruit à partir des lignes profilométriques.

Dans le cadre de ce filtrage on peut éliminer des points aberrants et/ou lisser la surface ; ces deux opérations se font typiquement à l'aide de techniques numériques connues. De manière plus spécifique, on procède ensuite à la soustraction du fond, pour s'affranchir de la courbure de la pièce dans le sens Z (i.e. dans le sens orthogonal à la direction de balayage P). Cette étape conduit à un deuxième fichier de données tridimensionnelles de la surface de la pièce ; ce fichier est appelé ici F2.

Dans un mode de réalisation de cette troisième étape, on effectue d'abord, dans une première sous-étape, sur chaque ligne profilométrique un lissage numérique (par exemple par un filtrage exponentiel approprié), puis on supprime avantageusement les basses fréquences (par exemple par un filtre passe-haut approprié), puis on procède au redressement du profil (par exemple par une régression linéaire) ; l'ordre de ces différents traitements peut être modifié, mais l'ordre indiqué est préféré.

Ensuite on traite, dans une deuxième sous-étape, le profil tridimensionnel, par exemple par une régression planaire (calcul du plan moyen), et on enlève les points aberrants. Ce traitement peut par exemple comprendre un filtrage des points en fonction de leur écarttype, et un filtrage des points trop éloignés du plan.

Une quatrième étape vise à identifier ou localiser sur la surface à traiter les zones à traiter. Ces zones sont définies par des caractéristiques de relief spécifiques. On détermine donc les zones sur lesquelles le traitement de surface sera appliqué à partir du relief de la surface à traiter. Cette étape est essentielle pour le procédé selon l'invention. En effet, par dans le cas d'une impression sur la surface par exemple, le procédé d'impression selon l'invention ne consiste pas à imprimer une image établie d'avance sur une surface ; dans le cadre du procédé selon l'invention on n'approvisionne pas une image (par exemple sous la forme d'un fichier), mais les zones de la surface qui seront par la suite traitées par le moyen de traitement de surface sélectionné sont déterminées au cours du procédé lui-même, en fonction du relief de la surface. Autrement dit (et pour l'exemple d'un traitement de surface par impression au jet d'encre), la forme fine de l'image imprimée sur la surface dépend de la surface elle-même, elle n'est pas fixée d'avance.

Cette quatrième étape vise à générer l'image binaire (fichier F3) de la surface à traiter. Cette image binaire comprend pour chaque point dans le plan QP une information binaire. Pour chaque point ladite information binaire indique si un traitement de surface sera effectué ou non.

Typiquement, les zones à traiter sont des bas-reliefs (i.e. des creux) ou des haut-reliefs (i.e. des bosses), ou encore les deux à la fois. On ajuste alors un seuil minimal et un seuil maximal de hauteur (cette hauteur correspondant à des « niveau de gris » sur une image de la surface), et les points comprise entre le seuil minimal et le seuil maximal seront définis comme points « noirs » (i.e. feront l'objet du traitement de surface), et les point au-dessus du seuil maximal et au-dessous du seuil minimal seront « blancs » (i.e. ne feront pas l'objet du traitement de surface). Cette détermination des seuils (par exemple l'écart entre le seuil maximal et le seuil minimal) peut être la même pour des différentes pièces similaires d'une même série, et notamment pour des pièces issues d'un même moule.

Dans une cinquième étape on procède au traitement de la surface à traiter. Ce traitement comprend typiquement un dépôt de matière. Typiquement, ce traitement de surface se fait par un outil de traitement de surface qui est fixée sur un bras de robot et qui effectue une ou plusieurs passes de balayage au-dessus de la surface à traiter, de préférence selon une trajectoire identique à celle utilisée pour l'acquisition des données profilométriques de la pièce. Cet outil peut être une tête d'impression par jet d'encre capable de déposer une encre. On entend ici par « encre » toute préparation liquide capable de former, après séchage et/ou réticulation, un dépôt solide sur un substrat solide; ce terme englobe ici donc les encres habituellement utilisées dans les imprimantes à jet d'encre, mais aussi les vernis (colorés ou non, opaques ou transparents) et d'autres produits

Ce traitement peut être fait en une ou plusieurs passes, et on peut utiliser une ou plusieurs encres, par exemple une encre de couleur et un vernis transparent ou semi-transparent déposé au-dessus de l'encre de couleur. Ce vernis peut avoir différentes fonctions, par exemple une fonction de protection contre les rayures, ou une fonction de modification des propriétés optiques (fonction anti-reflet, fonctions esthétiques telles que modification de la brillance, modification de la couleur perçue), ou une fonction de modification du toucher, ou encore une fonction anti-salissures.

Selon un mode de réalisation avantageux, lorsque l'on utilise lors de la cinquième étape plusieurs encres, on utilise pour chaque encre une tête d'impression différente.

Selon un autre mode de réalisation avantageux, qui peut être combiné avec les autres modes de réalisations avantageux et chacune de leurs variantes, on utilise un système d'impression (comprenant un robot, un système de détermination de la zone à imprimer et un outil de traitement de surface) possédant une précision de l'ordre de X, c'est-à-dire que par rapport à la forme de la zone à traiter l'écart de placement dudit traitement (par exemple l'écart de placement de l'impression) ne dépasse pas une valeur de X. Cette valeur de X est avantageusement inférieure à 100 µm, et plus avantageusement inférieure à 90 µm.

Avantageusement on utilise une tête d'impression à haute résolution avec un espacement d'au moins 360 buses par pouce ; une telle tête peut par exemple comporter un total de 512 buses.

Comme indiqué ci-dessus, selon une caractéristique essentielle de l'invention la forme fine de l'image imprimée sur la surface dépend de la surface elle-même. Le procédé est donc capable d'identifier les zones de la surface à traiter qui seront imprimées. A titre d'exemple, dans le cas où la pièce est un élément de tableau de bord de véhicule automobile présentant des coutures, artificielles ou réelles, qui doivent être colorées, l'absence accidentelle d'un point de couture sera reconnue par le procédé, et la longueur de fil manquante ne sera pas colorée. Cet exemple illustre bien que le procédé selon l'impression n'implique pas l'impression d'une image prédéfinie, mais le traitement de surface sélectif (en l'occurrence la coloration) d'une zone dont l'identification fait partie du procédé lui-même.

On va maintenant illustrer le procédé selon l'invention à l'aide des figures.

La figure 1 montre de manière schématique une tête de mesure qui peut être utilisée dans le dispositif de traitement de surface selon l'invention. Il s'agit typiquement d'un profilométrie optique à balayage, sans contact mécanique avec la surface à analyser. Plus précisément, la tête de mesure **1** comporte une source laser **2** (typiquement une diode laser) qui émet un faisceau laser dit faisceau incident **3** qui est dirigé sur la surface **5** à analyser. Un capteur **6** détecte le faisceau réfléchi **7**; le dispositif comprend typiquement un système optique **8** comprenant au moins une lentille qui est traversé par le faisceau réfléchi. Cette tête de mesure effectue sur une ligne **4** de longueur *Y1* parallèle à la direction *Y* une succession de mesures ponctuelles, espacées d'une distance *ΔY* entre deux points voisins ; cette distance est typiquement constante. Ainsi on détecte pour chaque point dans la direction Y sa hauteur dans la direction verticale *Z*, et on obtient un profil de la hauteur de la surface sur une ligne balayée dans la direction *Y*; cette ligne est appelée ci-dessus ligne profilométrique. Ensuite, la tête de mesure ou la surface se déplace d'une distance *ΔX* dans une direction désignée comme *X*, qui est typiquement orthogonale à *Y* et correspond typiquement à la direction longue de la surface, et le profil est acquis sur cette ligne comme décrit précédemment. Ainsi, on peut obtenir un fichier F1 de points de la surface sur la zone analysée dans lequel chaque point est caractérisé par ses trois coordonnées *X, Y,Z.* Cette technique de profilométrie 3D par balayage laser est connue de l'homme du métier et ne sera pas présenté en plus grand détail.

La figure 2 montre de manière schématique un dispositif **10** selon l'invention qui permet d'exécuter le procédé selon l'invention. Ce dispositif comprend un robot monté sur un corps **17** ; dans cet exemple il s'agit d'un robot à cinq axes, les axes étant repérés par les lettres **A1** à **A5**. Les bras articulé **15** du robot comprend à son extrémité un bras de préhension **16** sur lequel peut être monté ladite tête de mesure **1** ainsi que l'outil de traitement de surface. La pièce **12** à traiter repose sur un support **11** qui permet un positionnement reproductible et identique des pièces réputées identiques d'une même série. La surface **4** à traiter de la pièce **12** est dirigée vers le haut. En l'occurrence il s'agit d'une pièce galbée ; les directions P et Q indiquées sur cette figure sont expliquées ci-dessous en relation avec la figue 3. Le dispositif **10** est contrôlé par une machine informatique programmable (non montrée sur la figure).

Le terme « machine informatique » tel qu'utilisé ici inclut notamment les ordinateurs et les automates programmables. Ladite machine informatique est destinée et apte à contrôler l'activité d'un dispositif **10** selon l'invention, et dans ce but elle comprend notamment un programme d'ordinateur comprenant des instructions de code de programme pour l'exécution des étapes d'un procédé selon l'invention, lorsque ledit programme fonctionne sur ladite machine informatique.

Ledit outil de traitement de surface peut être intégré dans ladite tête de mesure, ou peut être contenu dans un boitier séparé de celui de ladite tête de mesure, qui peut être alors être solidaire avec ladite tête de mesure. Dans un autre mode de réalisation, non illustré sur les figures, le bras de préhension **16** appréhende alternativement la tête de mesure et l'outil de traitement de surface, sachant que la tête de mesure et l'outil de traitement de surface sont déposés sur une station d'accueil lorsqu'ils ne sont pas utilisés.

La figure 3 montre la photographie d'une pièce traitée par le procédé selon l'invention, en l'occurrence une pièce d'habillage d'un tableau de bord de véhicule automobile. Cette pièce comprend une zone de fausses coutures, qui s'étend parallèle au sens long de la pièce. Plus précisément, la couture artificielle de la pièce comprend deux aspects de relief : une couture centrale **31**, qui simule la liaison entre deux portions **30'**, **30"** de la pièce ayant des bords parallèles, et deux coutures périphériques **32'**, **32"** parallèles à ladite couture centrale **31**. Dans les coutures périphériques les points de couture apparaissent en hauteur plus élevée par rapport au plan de la pièce que la couture centrale. Le segment Q représente le balayage du faisceau laser du profilomètre **1** sur chaque point sélectionné sur une ligne P qui correspond à la ladite couture centrale **31**. Ce faisceau laser est représenté sur la figure 4(a) qui est une photographie d'une pièce similaire à celle de la figure 4 (mais de couleur plus sombre); on remarque sur la partie inférieure de l'image une règle calibrée en centimètres qui a été posée sur une partie de la surface de la pièce.

On acquiert ainsi dans la deuxième étape du procédé selon l'invention un fichier de données tridimensionnelles F1 permettant de localiser le relief dans le plan de la surface à traiter, et de quantifier pour chaque point dans ce plan la hauteur ou profondeur par rapport audit plan.

La figure 4(b) montre la courbe profilométrique brute correspondant à la ligne Q (courbe (1)) obtenu à un point sur la ligne P, et la même courbe profilométrique après redressement numérique (courbe (2)). Cette courbe (2) représente la variation de la hauteur de la surface par rapport à un niveau de base qui correspond à la surface galbée de la pièce. On identifie sur la courbe brute (1) les deux coutures périphériques **42'**, **42"** et la couture centrale **41**.

Après redressement numérique (courbe (2)) les deux coutures périphériques **52'**, **52"** et la couture centrale **51** apparaissent sur un plan droit.

La figure 4(c) montre une image reconstruite d'après des mesures profilométriques effectuées successivement sur plusieurs segments Q parallèles se situant sur une certaine longueur de la ligne P. Cette image est obtenue après redressement des lignes profilométrique, i.e. à partir de lignes profilométriques telles que représentées sur la figure 4(b), courbe (2). Les données ont également été filtrées. Ainsi, la figure 4(c) représente les données du fichier F2 à l'issue de la troisième étape du procédé selon l'invention ; le niveau de gris représente la hauteur par rapport audit niveau de base. Il fait apparaître les coutures artificielles dans un codage tridimensionnel.

Si l'on souhaite soumettre seuls les points des coutures périphériques de la surface à traiter au traitement, notamment par dépôt de matière, par exemple à l'impression par jet d'encre, on peut soumettre les données tridimensionnelles du fichier F2 à un traitement numérique qui élimine la couture centrale. Ce traitement numérique peut impliquer des filtres numériques tenant compte de la hauteur par rapport au plan de la surface, et/ou tenant compte de la morphologie de surface. On obtient ainsi à l'issue de la quatrième étape du procédé selon l'invention un fichier F3 de données tridimensionnelles retraitées qui représente une image binaire de la surface à traiter.

La figure 4(d) montre une telle image binaire (i.e. en noir et blanc) obtenue à partir des données tridimensionnelles du fichier F2 par un filtrage approprié. En l'occurrence, ce filtrage a été conçu pour éliminer la couture centrale **31** qui ne devait pas être traitée par le traitement de surface. Les lignes **72'**, **72"** correspondent aux coutures **32'**, **32"**. Cette image binaire correspond à un fichier F3 de données binaires, qui indique pour chaque point élémentaire si un traitement de surface doit être effectué (typiquement par projection d'une goutte d'encre ou de vernis) ou non. Les points qui constituent ce fichier F3 sont de préférence définis sur un espace bidimensionnel.

En conclusion intermédiaire, comme indiqué ci-dessus, la courbe des hauteurs obtenue sur une ligne profilométrique (courbe (1) de la figure 4(b)) entre dans la construction du fichier F1. Ce fichier comprend pour chaque point dans le plan QP une hauteur orthogonale à ce plan. Après redressement et différentes opérations de filtrage numérique des données on obtient le fichier F2 : on peut ainsi représenter la surface par une image reconstruite dans laquelle la hauteur est représentée comme niveau de gris, à l'instar de la figure 4(c).

Le procédé selon l'invention n'utilise pas directement ce fichier F2 pour procéder au traitement de surface par dépôt de matière, ce dépôt étant réalisé par projection de gouttes d'encre ou de vernis. Il faut donc transformer le fichier F2, qui comprend des données tridimensionnelles, avec une valeur de hauteur pour chaque point dans le plan QP, en un fichier F3, dans lequel chaque point dans le plan QP est associé non plus à une hauteur mais à une valeur binaire, qui indique la présence ou l'absence du traitement de surface en ce point.

Nous allons maintenant expliquer en plus grand détail ce procédé de filtrage qui conduit au fichier F3 de données binaires, et qui représente la quatrième étape du procédé selon l'invention.

La figure 5 montre une ligne profilométrique après redressement numérique, similaire à la courbe (2) de la figure 4(b). L'axe horizontal représente une position sur le segment Q (figure 3), l'axe vertical une hauteur par rapport au plan QP. On distingue deux coutures périphériques **52'**, **52"** et la couture centrale **51**.

La figure 5 (dans ses trois variantes (a), (b) et (c)) sera utilisé ici pour expliquer l'utilisation de seuils Zₘₐₓ, Zₘᵢₙ pour définir les zones sur lesquelles sera appliquées le traitement de surface. Ce seuillage est expliqué ici pour une seule ligne profilométrique ; il est possible de procéder ainsi ligne par ligne, mais en pratique il est plus avantageux d'effectuer cette opération en utilisant l'ensemble des données tridimensionnelles du fichier F2.

Cette transformation peut se faire par un filtrage approprié. Il doit être adapté à chaque type de topographie de surface.

A titre d'exemple, le principe d'un tel filtrage est illustré sur la figure 5 pour le cas des fausses coutures. Il comprend une étape dans laquelle on identifie l'aspect de surface à traiter. Cela peut se faire par un écrêtage, qui peut être symétrique ou non symétrique (ou même unilatéral). Les figures 5 (a) et 5(b) montrent deux écrêtages symétriques différents, qui n'ont pas le même but : l'écrêtage de la figure 5(a) vise à identifier la couture centrale **51,** en vue de son traitement de surface sélectif, alors que l'écrêtage de la figure 5(b) vise à identifier les deux coutures périphériques **52'**,**52"**, en vue de leur traitement sélectif. Dans l'exemple de la figure 5(a) on fixe un seuil Zₘₐₓ et un seuil Zₘᵢₙ de manière à sélectionner la zone de la couture centrale **51**, et on transforme les valeurs de hauteur (axe vertical) en valeurs binaires : « noir » pour tout point sur l'axe horizontal dont la valeur de hauteur se situe entre Zₘᵢₙ et Zₘₐₓ, et « blanc » pour tout pont sur l'axe horizontal dont la valeur de hauteur se trouve au-dessus de Zₘₐₓ ou au-dessous de Zₘᵢₙ. Ainsi on construit un fichier de données binaires, appelé ici fichier F3. Dans la cinquième étape du procédé selon l'invention, un point sur la ligne profilométrique auquel a été attribué la valeur « noir » (peu importe son appellation) sera alors soumis au traitement de surface sélectif, alors qu'un point « blanc » ne sera pas soumis audit traitement de surface sélectif.

Les valeurs des seuils Zₘᵢₙ et Zₘₐₓ peuvent être déterminées de manière automatique, ou bien de manière manuelle. Elle est effectuée notamment pour la première pièce d'une série de pièces réputées identiques (typiquement : fabriquées dans le même moule) ; en effet, dans de nombreux cas cette détermination des seuils sur un profile redressé permet de traiter une série de pièces réputées identiques de manière stable et reproductible. Il convient de noter qu'en pratique la surface des pièces, même issues d'un même moule, n'est pas totalement reproductible, et que ces écarts ne permettent pas d'obtenir un résultat satisfaisant en imprimant une image sur la surface selon les procédés de l'état de la technique.

Comme cela est montré sur la figure 5(b), on peut choisir par exemple un seuil Z'ₘₐₓ inférieur au seuil Zₘₐₓ. On obtient ainsi une zone de traitement de surface plus étroite sur l'axe horizontal ; cela est illustré sur la figure 5(c) où la boîte en lignes pointillées représente la largeur de la zone obtenue avec un seuil Zₘₐₓ plus bas que la boîte en lignes pleines.

On peut également choisir de localiser les zones d'intérêt **52'**,**52"** avec une largeur faible dans l'exemple de la figure 5(b) et 5(c) : avec un seuil et Zₘₐₓ plus bas, et puis d'élargir (dilater) artificiellement la zone à traiter ainsi définie, par exemple par une largeur constante. Comme mentionné ci-dessus, cet écrêtage et cette sélection de la zone d'intérêt peuvent être faits manuellement, pour un type de pièce donnée. Cette étape peut nécessiter la génération, à titre tentatif, d'un fichier F3 pour visualiser l'image binaire ainsi obtenue ; on peut ensuite modifier le seuil Zₘₐₓ et/ou Zₘᵢₙ pour obtenir un résultat satisfaisant. Comme indiqué ci-dessus, typiquement, cette paramétrisation est effectuée pour une pièce d'essai dans une série de pièces présentation le même type de topographie de surface (par exemple des pièces de tableau de bord issues d'un même moule).

Selon un mode de réalisation particulièrement avantageux de l'invention on procède ensuite à des traitements supplémentaires sur le fichier binaire pour améliorer la qualité du traitement de surface, et notamment la qualité de son positionnement. A titre d'exemple, on peut dilater (agrandir) les zones en noir, ou au contraire éroder les zones en noir. On peut supprimer les points noirs isolés (considérés comme du bruit) ou les zones contiguës de points noirs qui ne dépassent pas une certaine superficie (exprimée en nombre de pixels). On peut également arrondir les angles des zones noires. On peut également supprimer les trous à l'intérieur de zones noires. Ces traitements supplémentaires effectués sur le fichier binaire sont très avantageux pour obtenir un traitement de surface de grande qualité, tel qu'il est exigé par l'industrie de l'automobile, l'industrie de la maroquinerie et d'autres industries de produits posant des hautes exigences de qualité de surface.

La figure 6 montre quatre photos agrandies de points de couture colorés par le procédé selon l'invention, en utilisant une encre grise. La pièce est la même que celle des figures 3 et 4. On remarque l'extraordinaire précision de ce traitement de surface de surface sélectif et localisé.

La figure 7 montre une autre surface qui peut être traitée par le procédé selon l'invention. En l'occurrence il s'agit d'une surface de PVC sur lequel a été créée par embossage un relief régulier avec des « Y » en dépression. La figure 7(a) montre le relief représenté en niveaux de gris (qui est une représentation du fichier F2), la figure 7(b) montre l'image binaire (bitmap) qui correspond au fichier F3, issu du fichier F2.

La figure 8 montre une autre surface qui peut être traitée par le procédé selon l'invention. En l'occurrence il s'agit d'une surface de type « peau de crocodile », naturelle ou artificielle (réalisée par exemple par embossage sur une surface PVC). La figure 8(a) montre le relief représenté en niveaux de gris (fichier F2), la figure 8(b) montre l'image binaire (bitmap) issu du fichier F2.

Dans les exemples des figures 7 et 8, le traitement de surface (en l'occurrence le dépôt d'encre) a été effectué dans des zones en dépression par rapport à leur environnement, mais le procédé peut être appliqué de la même manière pour traiter des zones qui se trouvent en hauteur par rapport à leur environnement, à l'instar des coutures de la pièce montrée sur la figure 3.

Dans l'exemple de la pièce montrée sur la figure 3, on note que la ligne des coutures parallèles **31,32'**,**32"** n'est pas une droite. Pour le balayage par la tête de mesure 1, on peut suivre une ligne droite P, si la largeur de balayage Q est suffisamment supérieure à la largeur nécessaire pour couvrir les coutures et leur environnement de part et d'autre des coutures périphériques **32'**,**32"**. En cas de besoin il est possible de subdiviser la largeur de la pièce dans son sens long en plusieurs tronçons ; la tête de mesure **1** suivra une ligne droite P sur chacun des tronçons, avec une translation dans le sens orthogonal entre deux tronçons voisins. Alternativement on peut prévoir une adaptation continuelle de la position de la tête de mesure **1** lors de son balayage ; cela augmente cependant considérablement la quantité de données numériques à traiter.

Dans une fabrication de série impliquant le traitement de pièces identiques, il est avantageux, afin d'obtenir une résolution et précision optimales, de procéder pour chaque pièce individuelle au balayage profilométrique de la surface, car même au sein d'une série de pièces réputées identiques les écarts entre deux pièces sont suffisamment grands pour engendrer des écarts visibles après décoration. En revanche, le filtrage numérique pour transformer le fichier F1 en fichier F2 peut être défini pour une série de pièces réputées identiques, car la variation locale entre deux pièces doit normalement être inférieure à la différence entre les reliefs de la couture centrale et des coutures périphériques ; ce suppose en pratique que chaque pièce puisse être positionné sous la tête de manière reproductible. Il est donc nécessaire de disposer d'un support adapté pour chaque type de pièce.

Le procédé selon l'invention peut être appliqué dans de nombreux secteurs de l'industrie. Il peut être utilisé pour décorer des pièces d'habillage pour un habitacle de véhicule terrestre, maritime ou aérien. A titre d'exemple il peut être utilisé pour décorer la surface des tableaux de bords d'automobiles, et pour décorer d'autres pièces visibles servant d'habillage dans un habitacle d'automobile. Il peut être utilisé dans l'industrie du cuir, de la maroquinerie et de l'ameublement, pour décorer des surfaces de cuir naturel ou artificiel, destiné aux usages les plus divers. Cette décoration peut notamment viser les coutures visibles des pièces de décoration, qui peuvent être artificielles (dans le cas de pièces en matière plastique, par exemple en PVC) ou fonctionnelles (dans le cas de pièces en cuir naturel). Elle peut également viser le grainage de surfaces grainées, comme le grainage du cuir ou de surfaces de type « peau de crocodile », ou tout type de relief de surface obtenu par des procédés techniques. Elle peut viser plus généralement tous les aspects de surface qui représentent le fond d'un bas-relief ou le haut d'un relief.

Le procédé selon l'invention peut être réalisé avec de nombreuses variantes.

A titre d'exemple, on peut procéder à un prétraitement de la zone à traiter avant le dépôt de matière. Ce prétraitement peut être par exemple un traitement corona ou un traitement par plasma à pression atmosphérique. Il peut émaner d'un outil de traitement spécifique, qui sera alors un outil de prétraitement, porté par le bras du robot, ledit outil se déplaçant sur la zone à prétraiter.

On peut également déposer une première couche de matière qui peut être déposée sur une zone plus large que la zone d'impression calculée par le logiciel. Cette matière peut être une couche d'accrochage, ou une couche de protection. Elle peut par exemple être transparente, ou translucide, et possible colorée, ou elle peut être opaque.

Le traitement de surface peut viser la décoration et/ou la protection. On peut par exemple effectuer un premier traitement de surface de décoration, en une ou plusieurs passes, et un deuxième traitement de surface de protection, en une ou plusieurs passes. Ledit premier et deuxième traitement de surface peut se baser sur le même fichier F3 ou sur des fichiers F3 différents ; le deuxième fichier F3 pouvant être obtenu par exemple par dilatation numérique des points « noirs » du premier fichier F3. La même remarque s'applique aux différentes passes d'un traitement de décoration et/ou de protection, qui peuvent se superposer strictement, ou la deuxième passe peut utiliser des points dilatés, ou encore des points rétrécies, ou encore un fichier F3 obtenu avec un seuillage Zₘₐₓ - Zₘᵢₙ différent ; chacune de ces variantes peut conduire à des effets décoratifs particuliers, surtout si l'on utilise des encres différentes. Dans ce but plus généralement toute autre transformation numérique des fichiers F3 est possible.

On peut aussi, après une ou plusieurs passes de traitement de surface par dépôt de matière, procéder à une nouvelle acquisition des données profilométriques pour reprendre le procédé selon l'invention à sa deuxième étape. Cela sera utile surtout lorsque l'on dépose lors de la décoration de la surface une épaisseur importante de matière.

Dans une variante du procédé selon l'invention, on ne crée pas à la quatrième étape un fichier représentant une image binaire de la surface, mais une image ternaire ou même encore plus complexe. A titre d'exemple, il est possible d'effectuer sur le même fichier 2 le traitement par les seuils Zₘᵢₙ et Zₘₐₓ visant à sélectionner la couture centrale **51**, à l'instar de la figure 5(a), et le traitement par les seuils Zₘᵢₙ et Zₘₐₓ visant à sélectionner les coutures périphériques **52'**,**52"**, à l'instar de la figure 5(b) de données ; on alloue donc une première valeur fixe aux point de traitement de surface de la couture centrale, et une deuxième valeur fixe aux points de traitement de surface des coutures périphériques, et une troisième valeur fixe aux point sans traitement de surface. Lors de la cinquième étape du procédé, les deux traitements de surface différents peuvent alors être effectué avec successivement avec deux outils de traitement séparés, ou encore avec un seul outil de traitement capable d'effectuer de manière sélective deux traitement différents ; un tel outil peut être une tête à jet d'encre capable de projeter de l'encre de deux couleurs différentes.

Dans une autre variante du procédé selon l'invention, les données profilométriques sont calculées à partir d'images enregistrées par une caméra optique qui remplace, la tête de mesure **1** et dont les images sont analysées pour obtenir une image binaire de la surface. Le traitement de surface peut aussi comprendre au moins une étape de transformation de la surface par des moyens qui n'impliquent pas le dépôt de matière, ou il peut consister entièrement en étapes qui n'impliquent pas le dépôt de matière. A titre d'exemple, ladite étape de transformation de la surface par des moyens qui n'impliquent pas de dépôt de matière peut être : le bombardement de la surface par des particules, l'irradiation de la surface par un faisceau de lumière, l'apport localisé de chaleur, le perçage de trous par faisceau laser. Ces étapes de transformation peuvent avoir pour but notamment la transformation chimique d'une couche superficielle du matériau (par exemple une réticulation ou un durcissement par voie photochimique ou thermique), ou sa transformation physique (par exemple par fusion locale).

## Revendications

1. Procédé de traitement sélectif et localisé de la surface d'une pièce, dans lequel
(a) On approvisionne une pièce présentant une surface à traiter, ladite surface étant définie par une direction P et une direction Q, lesdites directions P et Q pouvant présenter une courbure ;
(b) On acquiert des données profilométriques tridimensionnelles de la surface à traiter, pour obtenir un ensemble F1 de données tridimensionnelles de la surface à traiter, ledit ensemble F1 associant à chaque point dans le plan PQ une hauteur ;
(c) On procède à un traitement numérique de cet ensemble F1 de données visant à soustraire lesdites courbures, pour obtenir un ensemble F2 de données tridimensionnelles retraitées de la surface à traiter ;
(d) On procède à un traitement numérique de cet ensemble F2 de données, pour obtenir un ensemble F3 de données binaires de la surface à traiter, ledit traitement numérique attribuant à chaque point de la surface une première valeur binaire ou une deuxième valeur binaire, selon au moins un critère lié à la hauteur du point de la surface ;
(e) On procède à un traitement sélectif et localisé de la surface en utilisant ledit ensemble F3 de données binaires, ledit traitement de surface étant effectué uniquement pour les points de la surface dont la donnée binaire prend ladite première ou ladite deuxième valeur binaire.

2. Procédé selon la revendication 1, dans lequel à l'étape (c) on effectue au moins une opération de filtrage des données.

3. Procédé selon la revendication 1 ou 2, dans lequel on effectue au moins une opération de filtrage de données pour éliminer des points aberrants.

4. Procédé selon l'une quelconque des revendications 1 à 3, dans lequel on retraite l'ensemble de données F3
- pour éliminer des points isolés de traitement de surface, et/ou
- pour éliminer des zones contiguës de traitement de surface n'atteignant pas une certaine superficie, et/ou
- pour élargir des zones contiguës de traitement de surface, et/ou
- pour arrondir les angles de zone de traitement de surface, et/ou
- pour supprimer des trous d'une taille inférieure à un certain nombre de points à l'intérieur d'une zone de traitement de surface.

5. Procédé selon l'une quelconque des revendications 1 à 4, dans lequel lesdites données profilométriques tridimensionnelles sont obtenues à partir d'une succession de balayages linéaires selon des lignes de balayages parallèles à ladite direction P, avec un espacement constant entre deux lignes de balayages voisines, ledit espacement constant étant de préférence inférieur à 100 µm, et encore plus préférentiellement inférieur à 90 µm.

6. Procédé selon l'une quelconque des revendications 1 à 5, dans lequel ledit traitement de surface est identique pour tous les points dont la valeur binaire prend ladite première ou deuxième valeur.

7. Procédé selon l'une quelconque des revendications 1 à 6, dans lequel on effectue un premier traitement de surface pour les points dont la donnée binaire prend ladite première valeur binaire, puis un deuxième traitement de surface pour les points dont la valeur binaire prend ladite deuxième valeur binaire.

8. Procédé selon l'une quelconque des revendications 1 à 7, dans lequel :
- on répète l'étape (d) pour obtenir un ensemble de données F3' avec un critère lié à la hauteur du point de la surface différent de celui ayant été utilisé pour générer ledit ensemble de données F3, et
- on effectue deux traitements selon l'étape (e), à savoir un pour chacun des ensembles de données F 3 et F3', lesdits traitements pouvant être de natures identiques ou différentes.

9. Procédé selon l'une quelconque des revendications 1 à 8, dans lequel ledit traitement de la surface comprend une étape de dépôt de matière, tel que le dépôt d'encre, ou une étape d'enlèvement de matière, tel que le perçage d'un trou, ou une étape de modification chimique de la surface, tel qu'un apport d'énergie apte à réticuler la surface.

10. Procédé selon l'une quelconque des revendications 1 à 9, dans lequel ladite pièce est sélectionné dans le groupe formé par :
- les pièces d'habillage d'un habitacle de véhicule, et notamment d'une automobile, tels que les pièces d'habillage de tableaux de bord ou de portes,
- les pièces en cuir naturel ou artificiel, notamment les pièces de maroquinerie et d'ameublement ou des pièces entrant dans la fabrication des parties visibles de pièces de maroquinerie ou d'ameublement,
- les pièces présentant une surface en tissu,
- les pièces métalliques ou plastiques fabriquées en contact avec la surface d'un moule.

11. Utilisation du procédé selon l'une quelconque des revendications 1 à 10 pour la décoration de pièces présentant un relief de surface régulier ou irrégulier, ledit relief de surface pouvant représenter notamment un grainage, une couture, un joint, un rebord, un estampage.

12. Dispositif comprenant :
• un robot comprenant au moins un bras de préhension capable de porter un profilomètre laser, apte à acquérir les données profilométriques tridimensionnelles, et au moins un outil de traitement de surface ;
• une machine informatique communiquant avec ledit robot, ledit profilomètre laser et ledit au moins un outil de traitement de surface, et configurée pour contrôler l'activité dudit robot, dudit profilomètre laser et dudit au moins une outil de traitement de surface ;
ledit dispositif étant configuré pour et apte à la mise en oeuvre du procédé de traitement sélectif et localisée de la surface d'une pièce selon l'une quelconque des revendications 1 à 11.

13. Dispositif selon la revendication 12, **caractérisé en ce que** ladite machine informatique est configurée pour effectuer lesdits traitements numériques de données aux étapes (c) et (d).

14. Dispositif selon l'une quelconque des revendications 12 ou 13, **caractérisé en ce que** ledit outil de traitement de surface est une tête à impression par jet d'encre ou un émetteur de lumière de type laser.

15. Programme d'ordinateur comprenant des instructions de code de programme pour l'exécution des étapes d'un procédé selon l'une quelconque des revendications 1 à 10, lorsque ledit programme fonctionne sur une machine informatique destinée et apte à contrôler l'activité d'un dispositif selon l'une quelconque des revendications 12 à 14.

## Patentansprüche

1. Verfahren zur selektiven und lokalen Behandlung der Oberfläche eines Teils, wobei
(a) ein Teil bereitgestellt wird, das eine zu behandelnde Oberfläche aufweist, wobei die Oberfläche durch eine Richtung P und eine Richtung Q definiert ist, wobei die Richtungen P und Q eine Krümmung aufweisen können;
(b) dreidimensionale profilometrische Daten der zu behandelnden Oberfläche erfasst werden, um eine Gruppe F1 dreidimensionaler Daten der zu behandelnden Oberfläche zu erhalten, wobei die Gruppe F1 jedem Punkt in der Ebene PQ eine Höhe zuordnet;
(c) eine digitale Verarbeitung dieser Datengruppe F1 durchgeführt wird, die darauf abzielt, die Krümmungen abzuziehen, um eine Gruppe F2 aufbereiteter dreidimensionaler Daten der zu behandelnden Oberfläche zu erhalten;
(d) eine digitale Verarbeitung dieser Datengruppe F2 durchgeführt wird, um eine binäre Datengruppe F3 der zu behandelnden Oberfläche zu erhalten, wobei die digitale Verarbeitung jedem Punkt der Oberfläche einen ersten binären Wert oder einen zweiten binären Wert gemäß mindestens einem Kriterium zuordnet, das mit der Höhe des Punkts der Oberfläche verbunden ist;
(e) eine selektive und lokale Behandlung der Oberfläche bei Nutzung der Gruppe F3 binärer Daten durchgeführt wird, wobei die Oberflächenbehandlung nur für die Punkte der Oberfläche durchgeführt wird, deren binärer Datenwert den ersten oder den zweiten binären Wert annimmt.

2. Verfahren nach Anspruch 1, wobei in Schritt (c) mindestens ein Datenfiltervorgang durchgeführt wird.

3. Verfahren nach Anspruch 1 oder 2, wobei mindestens ein Datenfiltervorgang durchgeführt wird, um Ausreißerpunkte zu entfernen.

4. Verfahren nach einem der Ansprüche 1 bis 3, wobei die Datengruppe F3 aufbereitet wird, um
- isolierte Oberflächenbehandlungspunkte zu entfernen, und/oder
- angrenzende Oberflächenbehandlungszonen zu entfernen, die eine bestimmte Fläche nicht erreichen, und/oder
- angrenzende Oberflächenbehandlungszonen zu erweitern, und/oder
- die Oberflächenbehandlungszonenwinkel abzurunden, und/oder
- Löcher mit einer Größe zu löschen, die kleiner als eine bestimmte Anzahl von Punkten innerhalb einer Oberflächenbehandlungszone ist.

5. Verfahren nach einem der Ansprüche 1 bis 4, wobei die dreidimensionalen profilometrischen Daten ausgehend von aufeinanderfolgenden linearen Abtastungen gemäß Abtastlinien erhalten werden, die parallel zu der Richtung P mit einer konstanten Beabstandung zwischen zwei benachbarten Abtastlinien sind, wobei die konstante Beabstandung vorzugsweise kleiner als 100 µm und noch bevorzugter kleiner als 90 µm ist.

6. Verfahren nach einem der Ansprüche 1 bis 5, wobei die Oberflächenbehandlung für alle Punkte identisch ist, deren binärer Wert den ersten oder zweiten Wert annimmt.

7. Verfahren nach einem der Ansprüche 1 bis 6, wobei eine erste Oberflächenbehandlung für die Punkte durchgeführt wird, deren binärer Datenwert den ersten binären Wert annimmt, dann eine zweite Oberflächenbehandlung für die Punkte, deren binärer Wert den zweiten binären Wert annimmt.

8. Verfahren nach einem der Ansprüche 1 bis 7, wobei:
- Schritt (d) wiederholt wird, um eine Datengruppe F3' mit einem Kriterium zu erhalten, das mit der Höhe des Punkts der Oberfläche verbunden ist, das von dem unterschiedlich ist, das zur Erzeugung der Datengruppe F3 verwendet wurde, und
- zwei Verarbeitungen nach Schritt (e), nämlich für jede der Datengruppen F3 und F3', durchgeführt werden, wobei die Verarbeitungen identischer oder unterschiedlicher Art sein können.

9. Verfahren nach einem der Ansprüche 1 bis 8, wobei die Behandlung der Oberfläche einen Schritt des Abscheidens von Material wie das Abscheiden von Druckfarbe oder einen Schritt des Entfernens von Material wie das Bohren eines Lochs oder einen Schritt der chemischen Oberflächenänderung wie ein Hinzufügen von Energie, die imstande ist, die Oberfläche zu vernetzen, umfasst.

10. Verfahren nach einem der Ansprüche 1 bis 9, wobei das Teil aus der Gruppe ausgewählt ist, die gebildet ist von:
- den Verkleidungsteilen eines Fahrgastinnenraums eines Fahrzeugs und insbesondere eines Kraftfahrzeugs wie den Instrumententafel- oder Türverkleidungsteilen,
- den Teilen aus Natur- oder Kunstleder, insbesondere den Lederwaren- und Mobiliarteilen oder Teilen, die in die Herstellung der sichtbaren Teile von Lederwaren und Mobiliar eingehen,
- den Teilen, die eine Oberfläche aus Stoff aufweisen,
- den Teilen aus Metall oder Kunststoff, die im Kontakt mit der Oberfläche einer Form hergestellt werden.

11. Verwendung des Verfahrens nach einem der Ansprüche 1 bis 10 für die Dekoration von Teilen, die ein regelmäßiges oder unregelmäßige Relief aufweisen, wobei das Oberflächenrelief insbesondere eine Körnung, eine Naht, eine Fuge, eine Kante, eine Prägung darstellen kann.

12. Vorrichtung, umfassend:
• einen Roboter, der mindestens einen Greifarm umfasst, der imstande ist, ein Laserprofilometer zu tragen, das imstande ist, die dreidimensionalen profilometrischen Daten zu erfassen, und mindestens ein Oberflächenbehandlungswerkzeug;
• eine Informatikmaschine, die mit dem Roboter, dem Laserprofilometer und dem mindestens einen Oberflächenbehandlungswerkzeug kommuniziert und ausgelegt ist, um die Aktivität des Roboters, des Laserprofilometers und des mindestens einen Oberflächenbehandlungswerkzeugs zu steuern;
wobei die Vorrichtung zur Durchführung des Verfahrens zur selektiven und lokalen Behandlung der Oberfläche eines Teils nach einem der Ansprüche 1 bis 11 ausgelegt und imstande ist.

13. Vorrichtung nach Anspruch 12, **dadurch gekennzeichnet, dass** die Informatikmaschine ausgelegt ist, um die digitalen Datenverarbeitungen der Schritte (c) und (d) durchzuführen.

14. Vorrichtung nach einem der Ansprüche 12 oder 13, **dadurch gekennzeichnet, dass** das Oberflächenbehandlungswerkzeug ein Tintenstrahldruckkopf oder ein Laserlichtsender ist.

15. Rechnerprogramm, das Programmcodebefehle für die Ausführung der Schritte eines Verfahrens nach einem der Ansprüche 1 bis 10 umfasst, wenn das Programm auf einer Informatikmaschine läuft, die bestimmt und imstande ist, die Aktivität einer Vorrichtung nach einem der Ansprüche 12 bis 14 zu steuern.

## Claims

1. Process for selectively and locally treating the surface of a part, wherein
(a) A part having a surface to be treated is provided, said surface being defined by a direction P and a direction Q, said surfaces P and Q able to have a curve;
(b) Three-dimensional profilometric data are acquired from the surface to be treated, in order to obtain a set F1 of three-dimensional data on the surface to be treated, said set F1 associating a height with each point in the plane PQ;
(c) This set F1 of data is processed digitally with a view to subtracting said curves, to obtain a set F2 of reprocessed three-dimensional data on the surface to be treated;
(d) This set F2 of data is processed digitally, to obtain a set F3 of binary data on the surface to be treated, said digital processing attributing, to each point on the surface, a first binary value or a second binary value, depending on at least one criterion related to the height of the point on the surface;
(e) The surface is selectively and locally treated using said set F3 of binary data, said surface treatment being performed only at points on the surface the binary datum of which has said first or said second binary value.

2. Process according to claim 1, wherein in step (c) at least one data filtering operation is performed.

3. Process according to claim 1 or 2, wherein at least one data filtering operation in order to remove aberrant points is performed.

4. Process according to any of claims 1 to 3, wherein the set of data F3 is reprocessed
- to remove isolated points from a surface treatment, and/or
- to remove contiguous zones from a surface treatment that do not reach a certain surface area, and/or
- to widen the contiguous zones of the surface treatment, and/or
- to round the angles of the zone of the surface treatment, and/or
- to remove holes of a size less than a certain number of points inside a zone of the surface treatment.

5. Process according to any of claims 1 to 4, wherein said three-dimensional profilometric data are obtained from a succession of linear scans according to scan lines parallel to said direction P, with a constant spacing between two neighboring scan lines, said constant spacing being preferably less than 100 µm, and more preferably less than 90 um.

6. Process according to any of claims 1 to 5, wherein said surface treatment is identical for all points the binary value of which takes said first or second value.

7. Process according to any of claims 1 to 6, wherein a first surface treatment is performed for the points the binary datum of which takes said first binary value, then a second surface treatment for the points the binary value of which takes said second binary value.

8. Process according to any of claims 1 to 7, wherein:
- step (d) is repeated to obtain a set of data F3' with a criterion related to the height of the point of the surface different from the one that was used to generate said set of data F3, and
- two treatments according to step (e) are performed, namely one for each one of the sets of data F3 and F3' , said treatments able to be of identical or different natures.

9. Process according to any of claims 1 to 8, wherein said treatment of the surface comprises a step of material deposition, such as the deposition of ink, or a step of removing material, such as the drilling of a hole, or a step of chemical modification of the surface, such as a supply of energy able to crosslink the surface.

10. Process according to any of claims 1 to 9, wherein said part is selected from the group formed by:
- the cover parts of a vehicle passenger compartment, and especially of a motor vehicle, such as the cover parts of dashboards or doors,
- parts made from natural or artificial leather, especially leatherwork or furnishing parts or parts used in the manufacturing of visible parts of leatherwork or furnishing parts,
- parts that have a fabric surface,
- metal or plastic parts manufactured in contact with the surface of a mold.

11. Use of the process according to any of claims 1 to 10 for the decoration of parts that have a regular or irregular surface relief, said surface relief able to represent especially a graining, a seam, a seal, an edge, a stamping.

12. Device comprising:
• a robot comprising at least one gripping arm capable of carrying a laser profilometer, able to acquire the three-dimensional profilometric data, and at least one surface treatment tool;
• a computer communicating with said robot, said laser profilometer and said at least one surface treatment tool, and configured to control the activity of said robot, of said laser profilometer and of said at least one surface treatment tool;
said device being configured to and able to implement the process for selectively and locally treating the surface of a part according to any of claims 1 to 11.

13. Device according to claim 12, **characterized in that** said computer is configured to perform said digital data processing in steps (c) and (d).

14. Device according to any of claims 12 or 13, **characterized in that** said surface treatment tool is an inkjet printhead or a light emitter of the laser type.

15. Computer program comprising program code instructions for the execution of the steps of a process according to any of claims 1 to 10, when said program operates on a computer intended and able to control the activity of a device according to any of claims 12 to 14.
